Europäisches Patentamt

European Patent Office

Office européen des brevets

(11) Numéro de publication: **0 260 247**
**A2**

## (12) DEMANDE DE BREVET EUROPEEN

(21) Numéro de dépôt: **87870123.4**

(22) Date de dépôt: **09.09.87**

(51) Int. Cl.⁴: **B 62 D 13/06**
**B 62 D 13/04**

(30) Priorité: **10.09.86 BE 2017148**

(43) Date de publication de la demande:
**16.03.88 Bulletin 88/11**

(84) Etats contractants désignés: **BE DE FR NL**

(71) Demandeur: **Ets JOSKIN S.A.**
**39, Rue de Wergifosse 39**
**B-4634 Soumagne (BE)**

(72) Inventeur: **Joskin, Victor**
**rue de Wergifosse 39**
**B-4634 Soumagne (BE)**

(74) Mandataire: **Dellicour, Paul**
**Office de Brevets E. Dellicour rue Fabry 18/012**
**B-4000 Liège (BE)**

(54) **Essieu autovireur, suiveur ou directionnel, en marche avant et en marche arrière.**

(57) Dans le montage d'un essieu autovireur, suiveur ou directionnel, à inversement du sens de travail avec le sens de marche du véhicule, l'essieu autovireur présente une inclinaison α d'environ 8° avec au retournement un pivotement β d'environ 165°.

FIG.3

# Description

Essieu autovireur, suiveur ou directionnel, en marche avant et en marche arrière.

La présente invention concerne le montage d'un essieu autovireur, suiveur ou directionnel, sur tout système de renversement de l'essieu dans le but d'inverser le sens de travail de l'essieu avec le sens de marche, avant ou arrière, du véhicule.

On connaît par le brevet FR-A-2 521 513 un dispositif d'essieu autovireur pour semi-remorques à essieux multiples, dans lequel au moins un essieu du véhicule est rendu autovireur, en marche avant et marche arriére, du fait que le corps d'essieu, monté sur paliers tourillons, peut tourner de 180°.

Ce dispositif connu présente les inconvénients d'un mauvais fonctionnement au point de vue flottaison sur route et d'une usure prématurée des pneumatiques.

Des recherches et des études pratiques ont montré qu'un essieu autovireur ne pouvait pas fonctionner correctement, lorsqu'il était placé horizontalement.

C'est pourquoi il a paru avantageux suivant l'invention de réaliser le montage d'un essieu autovireur, de telle manière qu'il présente une inclinaison d'environ 8° avec au retournement un pivotement d'environ 165°.

L'invention est décrite maintenant sur la base du dessin annexé, à titre d'exemple uniquement, montrant en :

Figure 1 un essieu autovireur suivant l'invention;

Figure 2 l'essieur autovireur de la figure 1 ayant pivoté d'environ 165°;

Figures 3 et 4 une coupe, à plus grande échelle, suivant respectivement 3-3 de la figure 1 et 4-4 de la figure 2.

On a représenté au dessin un essieu 1, avec ses fusées 2 et ses articulations 3, et une barre d'accouplement 4 avec un vérin 5 et un mécanisme 6.

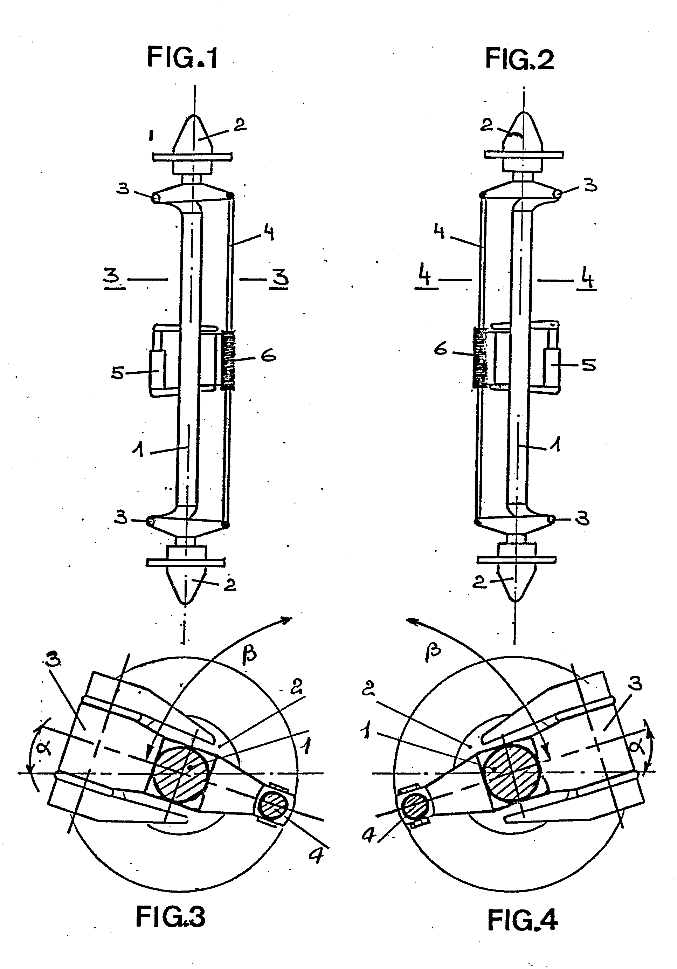

Comme on le voit au dessin (figures 3 et 4) on a donné à l'essieur une inclinaison α d'environ 8°, pour obtenir au retournement un pivotement β, d'environ 165°. Le moyen de pivotement de l'essieu peut être obtenu, bien entendu, par tous dispositifs appropriés.

Grâce à l'invention on a amélioré la conduite du véhicule en éliminant, d'une part, le flottement des roues de gauche à droite et, d'autre part, l'usure des pneumatiques.

# Revendications

Montage d'un essieu autovireur, suiveur ou directionnel, à inversement du sens de travail avec le sens de marche du véhicule, caractérisé en ce que l'essieu autovireur présente une inclinaison α d'environ 8° avec au retournement un pivotement β d'environ 165°.

0260247

FIG.1  FIG.2

FIG.3  FIG.4